Europäisches Patentamt

European Patent Office

Office européen des brevets

(19)

(11) Veröffentlichungsnummer: **0 281 585 B1**

(12) **EUROPÄISCHE PATENTSCHRIFT**

(45) Veröffentlichungstag der Patentschrift:
29.05.91 Patentblatt 91/22

(51) Int. Cl.⁵: **F02P 5/155, F02D 35/02**

(21) Anmeldenummer: **87905600.0**

(22) Anmeldetag: **03.09.87**

(86) Internationale Anmeldenummer:
**PCT/DE87/00400**

(87) Internationale Veröffentlichungsnummer:
**WO 88/02069 24.03.88 Gazette 88/07**

(54) **VORRICHTUNG ZUR ANPASSUNG DER GEMISCHBILDUNGSEINRICHTUNG UND DER ZÜNDEINRICHTUNG EINER BRENNKRAFTMASCHINE FÜR DEREN BETRIEB MIT ALLEN GÄNGIGEN OTTO-KRAFTSTOFF-QUALITÄTEN.**

(30) Priorität: **11.09.86 DE 3630907**

(43) Veröffentlichungstag der Anmeldung:
**14.09.88 Patentblatt 88/37**

(45) Bekanntmachung des Hinweises auf die Patenterteilung:
**29.05.91 Patentblatt 91/22**

(84) Benannte Vertragsstaaten:
**DE FR GB IT**

(56) Entgegenhaltungen:
DE-A- 2 951 342
GB-A- 528 350
GB-A- 2 109 859
GB-A- 2 156 905
GB-A- 2 169 957

(56) Entgegenhaltungen:
US-A- 2 958 317
US-A- 3 903 856
US-A- 4 399 780
US-A- 4 610 232
US-E- 31 218
Patent Abstracts of Japan, volume 9, No. 330
(M-442)(2053), 25 December 1985, & JP, A,
60162035

(73) Patentinhaber: **AUDI AG**
Auto-Union-Strasse 1 Postfach 220
W-8070 Ingolstadt (DE)

(72) Erfinder: **CHEMNITZER, Eberhard**
Haydnstrasse 6
W-7102 Lehrensteinsfeld (DE)

(74) Vertreter: Speidel, Eberhardt
Postfach 1320 Waldpromenade 26
W-8035 Gauting (DE)

## Beschreibung

Die Erfindung betrifft eine Vorrichtung zur Anpassung der Gemischbildungseinrichtung und der Zündeinrichtung einer Brennkraftmaschine für deren Betrieb mit allen gängigen Otto-Kraftstoff-Qualitäten gemäß dem Oberbegriff des Anspruchs 1.

Moderne, umweltfreundliche Kraftfahrzeuge werden derzeit zur Verringerung des Schadstoffausstoßes mit einem Dreiweg-Katalysator und einer sogenannten λ -Sonde ausgerüstet. Für einen hohen Wirkungsgrad des Katalysators ist es erforderlich, die Verbrennung in einem stöchiometrischen Verhältnis (λ = 1) durchzuführen. Die λ -Sonde ist daher als Sauerstoff-Sonde ausgeführt und Bestandteil einer Regelung der Gemischbildungseinrichtung.

Die bekannten Dreiweg-Katalysatoren werden durch verbleiten Kraftstoff geschädigt, so daß die sogenannten Kat-Fahrzeuge mit bleifreiem Kraftstoff betrieben werden müssen.

Bleifreier Kraftstoff ist jedoch noch nicht flächendeckend weder im europäischen Ausland noch in Übersee erhältlich. Um auch dort ein Kat-Fahrzeug verwenden zu können, ist es erforderlich, den Katalysator und die λ -Sonde zum Schutz vor Beschädigung durch bleihaltigen Kraftstoff auszubauen. Für eine Optimierung des Betriebs der Brennkraftmaschine ist es bekannt, neben dem Gemischkennfeld für Katalysatorbetrieb (λ = 1) ein weiteres Gemischkennfeld im elektronischen Steuergerät für die Gemischbildung abzuspeichern, das dem Betrieb ohne Katalysator (λ ≠ 1) angepaßt ist. Eine solche Umschaltung wird zweckmäßig in der Werkstatt beim Ausbau bzw. Einbau des Katalysators durch Verändern einer Schalterstellung oder durch Umstecken eines Steckers (PIN-Codierung) durchgeführt.

Trotz dieser Anpassung der Gemischbildungseinrichtung an die veränderten Verhältnisse nach dem Ausbau des Katalysators ist nachteilig noch kein optimaler Betrieb der Brennkraftmaschine möglich, da im elektronischen Steuergerät für den Zündzeitpunkt ein Zündkennfeld abgelegt ist, das nur auf die geringe ROZ/MOZ-Zahl von bleifreim Kraftstoff eingestellt ist und bleibt. Es sind weiter Kraftfahrzeuge mit Brennkraftmaschinen bekannt, die sowohl für den Betrieb mit Superkraftstoff als auch Normalkraftstoff geeignet sind. Dies ist notwendig für Länder, in denen Superkraftstoff nicht flächendeckend zur Verfügung steht oder die Qualität von angebotenem Superkraftstoff eher der von inländischem Normalkraftstoff entspricht.

Für den Betrieb mit den beiden Kraftstoffqualitäten sind zwei unterschiedliche Zündkennfelder für Superkraftstoff und Normalkraftstoff in der Zündwinkelsteuerelektronik abgespeichert, auf die entsprechend bei einer Betankung von Hand vom Fahrer umzuschalten ist. Nachteilig an einer solchen Umschaltung ist, daß diese bewußt vom Fahrer durchgeführt werden muß. Falls die Umschaltung von Superkraftstoff auf Normalkraftstoff vergessen wird, besteht die Gefahr eines Motorschadens, da bekanntlich gerade das gefährliche Hochgeschwindigkeitsklopfen nicht hörbar ist. Zudem kann vom Fahrer normalerweise nicht erkannt werden, wenn Superkraftstoff geringerer Qualität mit Werten, die eher einem Normalkraftstoff entsprechen, getankt wird, so daß auch hierbei eine Umschaltung unterbleibt. Neben der Gefahr eines Motorschadens ist dann weiter nachteilig, daß keine optimal möglichen Fahrleistungen erzielt werden, der Kraftstoffverbrauch und die Abgasimmissionen hoch sind.

Aufgabe der Erfindung ist es demgegenüber, eine Vorrichtung zur Anpassung der Gemischbildungseinrichtung und der Zündeinrichtung einer Brennkraftmaschine zu schaffen, mit der eine Brennkraftmaschine mit allen gängigen Otto-Kraftstoff-Qualitäten betrieben werden kann, wobei die Brennkraftmaschine gegen Beschädigung geschützt ist und bei bester Kraftstoffausnutzung ein umweltfreundlicher Betrieb durch optimale Regelung und Steuerung erfolgt, wobei dem Betreiber einer Brennkraftmaschine, insbesondere dem Fahrer eines Kraftfahrzeugs, keine entgegengesetzte Eingriffsmöglichkeit gegeben ist.

Diese Aufgabe wird mit den Merkmalen des Anspruchs 1 gelöst.

Gemäß Anspruch 1 ist eine umschaltbare Gemischbildungseinrichtung vorgesehen mit zwei abgelegten Gemischkennfeldern für jeweils λ = 1 (Verbrennung im stöchiometrischen Verhältnis bei einem Betrieb mit einem Drei-Weg-Katalysator und einer λ -Sonde für unverbleiten Kraftstoff) und für λ ≠ 1 beim Betrieb mit verbleitem Kraftstoff. Eine solche Umschaltung ist nur in Verbindung mit dem Ausbau oder Einbau eines Katalysators und einer λ -Sonde durchführbar. Es wird daher erfindungsgemäß vorgeschlagen, daß diese Umschaltung von Hand durch Umlegen oder Umstecken eines Schalters oder Steckers von der Werkstatt erfolgt, die die Aus- bzw. Einbauten für einen Katalysatorbetrieb vornimmt. Die Umschaltmöglichkeit an der Gemischbildungseinrichtung braucht somit dem Fahrer des Kraftfahrzeugs nicht bekannt zu sein, da die Umstellung ohnehin von der Werkstatt in Verbindung mit den Umbaumaßnahmen erfolgt.

Neben der Umstellung der Gemischbildungseinrichtung von Hand ist erfindungsgemäß zusätzlich eine automatische Anpassung von Zündwinkelkennfeldern an unterschiedliche Kraftstoffqualitäten vorgesehen. Dazu sind in der Zündelektronik vier unterschiedliche Zündwinkelkennfelder abgespeichert, wovon ein erstes für den Betrieb mit Superkraftstoff unverbleit ($s_u$), ein zweites für Normalkraftstoff unverbleit ($n_u$), ein drittes für Superkraftstoff verbleit ($s_b$) und ein viertes für Normalkraftstoff verbleit ($n_b$) optimiert und ge-

2

eignet ist.

Bei der vorbeschriebenen Umstellung von Katalysatorbetrieb auf Nicht-Katalysatorbetrieb (von unverbleitem Kraftstoff auf verbleiten Kraftstoff) wird zusätzlich zur handbetätigten Gemischkennfeldumschaltung ebenfalls handbetätigt eine erste Umschaltung an der Zündwinkelelektronik in der Weise vorgenommen, daß jeweils zwei Kennfelder entweder $s_u$ und $n_u$ oder $s_b$ und $n_b$ ausgewählt werden und zu einer Weiterverarbeitung zur Verfügung stehen. Zweckmäßig wird die Gemischkennfeldumstellung von $\lambda = 1$ auf $\lambda \neq 1$ sowie die Zündwinkelkennfeldumstellung von $s_u$ und $n_u$ auf $s_b$ und $n_b$ zugleich mit dem gleichen Schalter oder Stecker durchgeführt, so daß eine zwangsläufige richtige Zuordnung beispielsweise der Zündwinkelkennfelder für unverbleiten Betrieb ($s_u$ und $n_u$) zum Gemischkennfeld für $\lambda = 1$ gegeben ist. Die Umschaltung kann jedoch auch an zwei örtlich getrennten Stellen erfolgen, wobei auf die richtige Zuordnung zu achten ist.

Da die Auswahl und Umstellung der Zündwinkelkennfelder für Katalysatorbetrieb oder Nicht-Katalysatorbetrieb ebenfalls in Verbindung mit dem Aus- oder Einbau entsprechender Bauteile durch die Werkstatt erfolgt, ist eine dem Fahrer eines Kraftfahrzeugs bekannte und bewußte Umschaltmöglichkeit nicht notwendig.

Je nach Einstellung und Auswahl durch die Werkstatt stehen somit jeweils zwei Zündwinkelkennfelder für Superkraftstoff und Normalkraftstoff an der Zündelektronik zur Verfügung, die bereits für den Betrieb mit unverbleitem oder bleihaltigem Benzin optimal geeignet sind. Erfindungsgemäß ist nun eine weitere Umschaltung zwischen diesen zwei Zündwinkelkennfeldern $s_u$ und $n_u$ (oder $s_b$ und $n_b$) vorgesehen. Die Umschaltung erfolgt in Abhängigkeit des Ausgangs eines Schwellwertgebers, an den ein Aufnehmer für wenigstens einen Betriebsparameter der Brennkraftmaschine angeschlossen ist. Bei Erreichen eines eingestellten Schwellwerts wird dann eine Umschaltung automatisch vorgenommen. Als Betriebsparameter sind kritische Temperaturbereiche oder Betriebszustände geeignet, die eine Umschaltung zum Schutz der Brennkraftmaschine oder für eine Betriebsoptimierung erforderlich machen.

Die weiter oben beschriebene Umschaltung von Hand oder auch die automatische Umschaltung zwischen zwei Zündwinkelkennfeldern wird üblicherweise eine Umschaltung zwischen potentialfreien Kontakten sein. Wo erforderlich, kann die Umschaltung auch durch Spannungsänderungen an Analogeingängen erfolgen, beispielsweise durch Anbringen oder Entfernen außenliegender Widerstände oder Widerstandsgruppen.

Durch die erfindungsgemäße Kombination von Handumstellungen in der Werkstatt in Verbindung mit dem Aus- oder Einbau eines Katalysators und einer $\lambda$-Sonde und der automatischen Umschaltung und Anpassung an Super- oder Normal-Kraftstoff-Qualitäten wird erreicht, daß die Brennkraftmaschine optimal gesteuert und geregelt ist, so daß sie bei bester Kraftstoffausnutzung umweltfreundlich betrieben wird und gegen Beschädigung geschützt ist. Dem Fahrer ist dabei eine unmittelbare Eingriffsmöglichkeit für eine Fehlbedienung und einen damit verbundenen weniger optimalen Betrieb genommen.

Nach Anspruch 2 soll eine Umschaltung durch den Schwellwertgeber in Abhängigkeit charakteristischer Motortemperatur-Zustandsgrößen (Wasser, Öl, Ansaugluft) und/oder der Außentemperatur und/oder des Barometerstands durchgeführt werden. Anhand von kritischen Werten dieser Größen, unterhalb denen die entsprechenden Schwellwerte eingestellt sind, wird ermittelt, wann die automatische Umschaltung zwischen dem Zündwinkelkennfeld für Superkraftstoff auf das für Normalkraftstoff erforderlich wird.bzw. wann eine Rückschaltung wieder möglich ist.

Eine bevorzugte Ausführung wird mit Anspruch 3 beansprucht, wobei zusätzlich eine an sich bekannte, die Zündwinkelkennfeldsteuerung überlagernde Klopfregelung vorgesehen ist. Von dieser Klopfregelung wird als Betriebsparameter für den Schwellwertgeber die Klopfhäufigkeit und/oder die Klopfintensität abgegriffen, wobei bei Werten über dem Schwellwert, d.h. beginnendes, stärkeres Klopfen, das Zündwinkelkennfeld $s_u$ auf $n_u$ (bzw. $s_b$ auf $n_b$) automatisch umgeschaltet wird. Würde bei einem getankten Normalkraftstoff das Zündwinkelkennfeld $s_u$ beibehalten, würde starkes Klopfen auftreten bzw. über die Klopfregelung der Zündwinkel zurückgeregelt werden. Aus verschiedenen, an sich bekannten Gründen ist für die Klopfregelung jedoch nur ein bestimmter Regelbereich vorgesehen. Die Klopfregelung würde daher bei einem beibehaltenen Zündwinkelkennfeld $s_u$ an ihren unteren Anschlag zurückregeln. Wegen des begrenzten Regelbereichs ist dies möglicherweise nicht ausreichend, um einen klopfenden Betrieb der Brennkraftmaschine zu unterbinden, so daß neben eines wenig optimalen Betriebs zusätzlich die Gefahr einer Beschädigung der Brennkraftmaschine besteht. Zumindest ist jedoch die Regelung so einseitig an einen Anschlag gefahren, daß sie als dem abgespeicherten Zündwinkelkennfeld überlagernde Eingriffsgröße praktisch nicht mehr zur Verfügung steht. Wird dagegen automatisch auf das Zündwinkelkennfeld für Normalkraftstoff zurückgeschaltet, erfolgt die Zündwinkelsteuerung mit bereits generell reduzierten Werten, um die die Klopfregelung wieder in gewünschter Weise aktiv eingreifen kann.

Ein weiterer Vorteil bei Verwendung eines Klopfsignals als Schwellwert für die automatische Umschaltung besteht darin, daß sich alle möglichen Umwelt- und kritischen Motorparameter sowie die Oktanzahlwerte in der Klopfhäufigkeit indirekt gesammelt bemerkbar machen. Es braucht somit für eine geeignete Umschaltung nur ein einziger Schwellwert, nämlich der der Klopfhäufigkeit bzw. Klopfintensität abgefragt zu werden. Dadurch wird eine entsprechende Schaltung einfach im Aufbau und preisgünstig.

Nach Anspruch 4 wird vorgeschlagen, den eingestellten Schwellwert für eine Umschaltung nicht für alle Betriebszustände der Brennkraftmaschine konstant zu halten, sondern diesen entsprechend der unterschiedlichen Drehzahlen, zu verändern. Eine solche Veränderung kann beispielsweise kontinuierlich in Abhängigkeit der Drehzahl oder sprunghaft erfolgen mit einer Zuordnung zu bestimmten Drehzahlbereichen. Üblicherweise werden die Schwellwerte in niedrigen Drehzahlbereichen, wo ein Klopfen kaum auftritt, niedriger eingestellt sein.

Es ist bekannt, daß je nach Aufbau einer Brennkraftmaschine nicht jeder Zylinder gleich klopfempfindlich ist. Für eine erhöhte Sicherheit der erfindungsgemäßen automatischen Umschaltung soll nach Anspruch 5 der Schwellwert vom klopfempfindlichsten Zylinder oder über mehrere Zylinder gemittelt gebildet werden.

Um die automatische Umschaltung regelungstechnisch stabil zu gestalten bzw. ein ständiges Umschalten an Schwellwertbereichen mit instabilen Vorgängen zu verhindern, wird nach Anspruch 6 eine automatische Rückumschaltung von dem Normalkennfeld oder eine erneute Abfrage des Umschaltschwellwerts erst nach einer bestimmten eingestellten Wartezeit durchgeführt. Dabei kann die Wartezeit als echte verstrichene Zeit oder als bestimmte Anzahl von Verbrennungen vorgegeben sein.

Gemäß Anspruch 7 kann es je nach Gegebenheiten vorteilhaft sein, auch die Wartezeit in Abhängigkeit der Drehzahl oder von Drehzahlbereichen veränderlich zu gestalten.

Mit Anspruch 8 wird hervorgehoben, daß die erfindungsgemäße Umschaltung in Abhängigkeit der Klopfneigung sowohl bei an sich bekannter zylinderselektiver oder nicht zylinderselektiver Klopfregelung durchführbar ist.

Anhand eines Ausführungsbeispiels wird die Erfindung mit weiteren Merkmalen, Einzelheiten und Vorteilen näher erläutert.

Es zeigen

Fig. 1 den schematischen Schaltungsaufbau einer Vorrichtung zur Anpassung der Gemischbildungseinrichtung und der Zündeinrichtung einer Brennkraftmaschine,
Fig. 2 den ersten Teil eines Flußdiagramms zur Veranschaulichung der Schaltungsfunktion und die
Fig. 3 und 4 die Fortsetzung des Flußdiagramms nach Fig. 2.

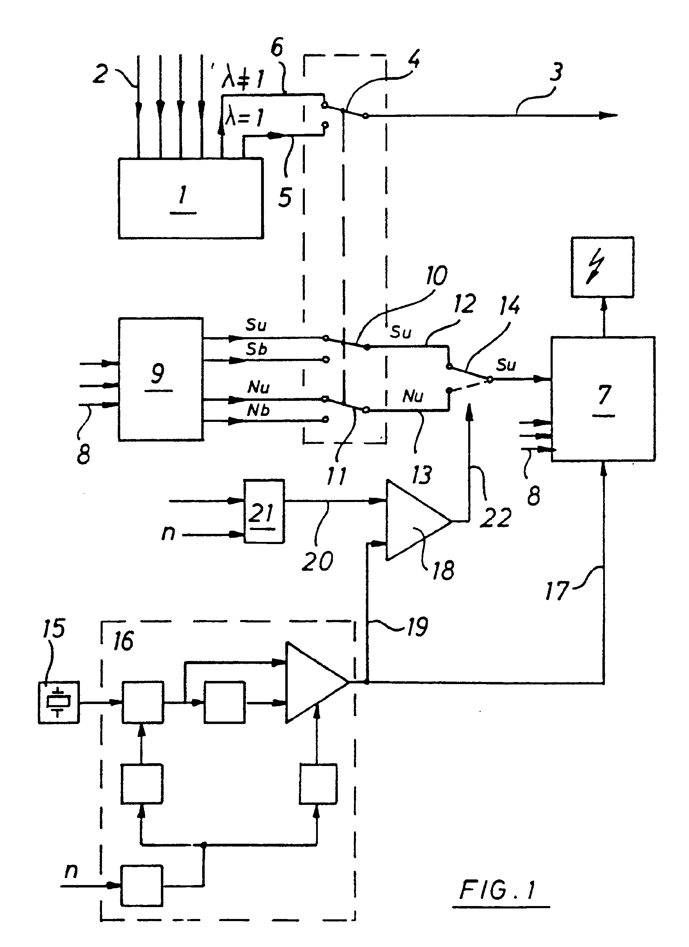

In Fig. 1 ist das Prinzipschaltbild einer Vorrichtung zur Anpassung der Gemischbildungseinrichtung und der Zündeinrichtung einer Brennkraftmaschine für deren Betrieb mit allen gängigen Otto-Kraftstoff-Qualitäten gezeigt, mit einem elektronischen Steuergerät 1 für die Gemischbildung, dem eine Reihe von Betriebsgrößen, wie z.B. Zylindertemperatur, Drosselklappenschalterstellung, $\lambda$-Sondensignal, etc. zugeführt sind, was durch die Pfeile 2 angedeutet ist. Das elektronische Steuergerät 1 hat ein umschaltbares Ausgangssignal (Pfeil 3), das zum Stellglied für die Einspritzmenge führt. Mit Hilfe eines Schalters oder Steckers 4 ist das Signal 3 auf einen regelnden Ausgang für $\lambda = 1$ (unterer Zweig 5) oder einen regelnden oder konstanten Ausgang für $\lambda \neq 1$ (oberer Zweig 6) umschaltbar. Diese Umschaltung erfolgt in der Werkstatt in Verbindung mit einem Aus- oder Einbau eines Katalysators und einer $\lambda$-Sonde.

Einem elektronischen Steuergerät 7 für die Zündung bzw. den Zündwinkel sind ebenfalls eine Reihe von Betriebsparameterwerten zugeführt, was mit den Pfeilen 8 angedeutet ist. Weiter ist eine (an sich im elektronischen Steuergerät 7 enthaltene) Speichereinheit 9 dargestellt, in der vier Zündkennfelder für Superkraftstoff verbleit und unverbleit und für Normalkraftstoff verbleit und unverbleit abgelegt sind. Entsprechende Ausgänge sind der Reihe nach mit $s_u$, $s_b$, und $n_u$, $n_b$ eingezeichnet. Mit Hilfe zweier Schaltarme 10, 11 eines Schalters, der mit dem Schaltarm 4, wie eingezeichnet, gekoppelt sein kann, wird in der Werkstatt von Hand zugleich mit der $\lambda$-Umstellung am Steuergerät 1 eine Auswahl bzw. Umschaltung aus den vier zur Verfügung stehenden Zündwinkelkennfeldern auf nur zwei getroffen. Im dargestellten Fall sind die Zündwinkelkennfelder $s_u$ und $n_u$ durchgeschaltet auf zwei Steuerlinien 12, 13.

Eine dieser Steuerlinien 12, 13 ist mit Hilfe einer automatischen Schalteinrichtung, dargestellt durch den Schalter 14, durchschaltbar für eine Verarbeitung im elektronischen Steuergerät 7. Im dargestellten Fall ist dies das Zündwinkelkennfeld $s_u$.

Zur Erkennung eines klopfenden Betriebs einer Brennkraftmaschine ist ein Klopfsensor 15 und eine angeschlossene, an sich bekannte Auswerteschaltung 16 vorgesehen, mit der die Klopfhäufigkeit und Klopfintensität als Signal auf der Leitung 17 dem Steuergerät 7 zugeführt wird. Je nach Klopfneigung wird darin der Zündwinkel stufenweise über gewisse Zeiträume (Stufenbreite) um einen bestimmten Wert (Stufenhöhe) in an sich bekannter Weise zurückgeregelt.

Einem Schwellwertgeber, dargestellt durch einen Vergleicher 18, ist ebenfalls das auf der Leitung 17 anliegende Klopfsignal über eine Leitung 19 zugeführt. Einem weiteren Eingang ist ein Schwellwertsignal 20 zugeführt, das in Abhängigkeit der Drehzahl n oder weiterer Parameter durch eine Schaltungseinrichtung 21 veränderlich ist. Wenn das Klopfsignal auf der Leitung 19 das Schwellwertsignal auf der Leitung 20 übersteigt, schaltet der Geber 18 den Schalter 14 um (angedeutet durch Pfeil 22), wodurch von dem Zündwinkelkennfeld $s_u$ auf das Zündwinkelkennfeld $n_u$ umgeschaltet wird.

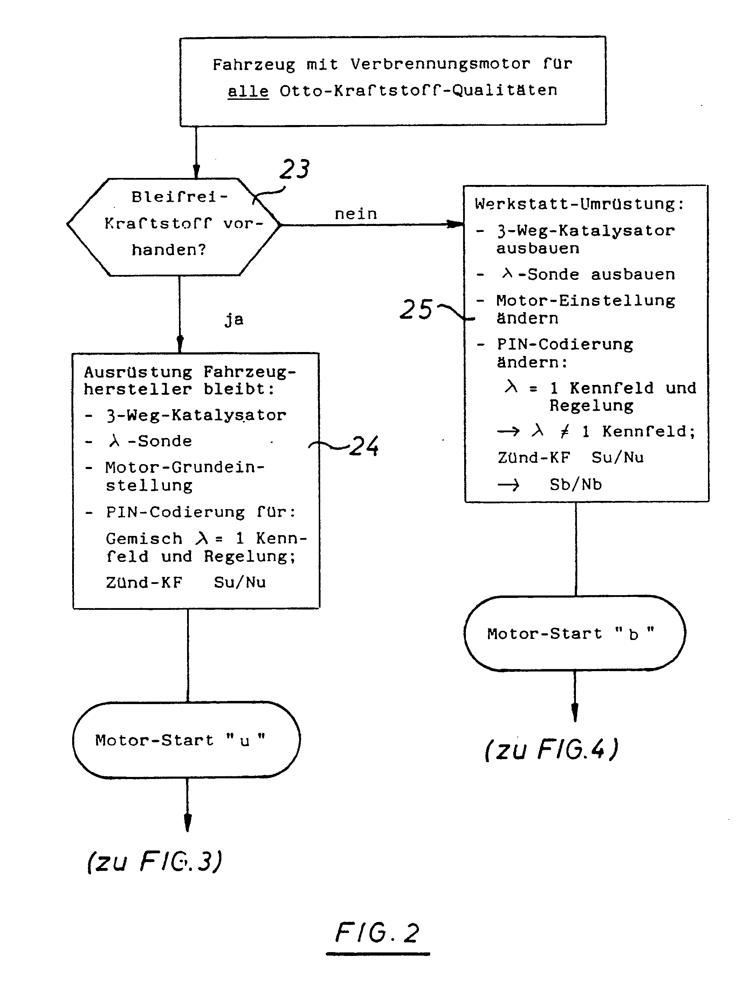

Die Funktion der Schaltung nach Fig. 1 wird mit einer Reihe weiterer differenzierender Eingriffe und Schaltungsbedingungen anhand der Diagramme nach den Fig. 2 bis 4 erläutert.

In Fig. 2 ist bei einem Kraftfahrzeug mit Verbrennungsmotor für alle Otto-Kraftstoff-Qualitäten nach Alternative 23 zu ermitteln, ob bleifreier Kraftstoff vorhanden ist. Für den Fall ja bleibt nach Maßnahme 24 die Ausrüstung eines Katalysatorfahrzeugs unverändert mit eingebautem Dreiweg-Katalysator, eingebauter $\lambda$ -Sonde sowie der Einstellung mit der PIN-Codierung für die Gemischbildungseinrichtung mit $\lambda = 1$ und der Einstellung für die beiden Zündwinkelkennfelder $s_u$ und $n_u$.

Ist dagegen kein bleifreier Kraftstoff vorhanden, nimmt die Werkstatt die Maßnahmen 25 vor mit einem Ausbau des Dreiweg-Katalysators und der $\lambda$ -Sonde sowie einer Umstellung von Hand auf das $\lambda \neq 1$ Kennfeld sowie auf die Zündwinkelkennfelder $s_b$ und $n_b$. Dies entspricht einem Umlegen der Schaltarme 4, 10, 11 aus Fig. 1.

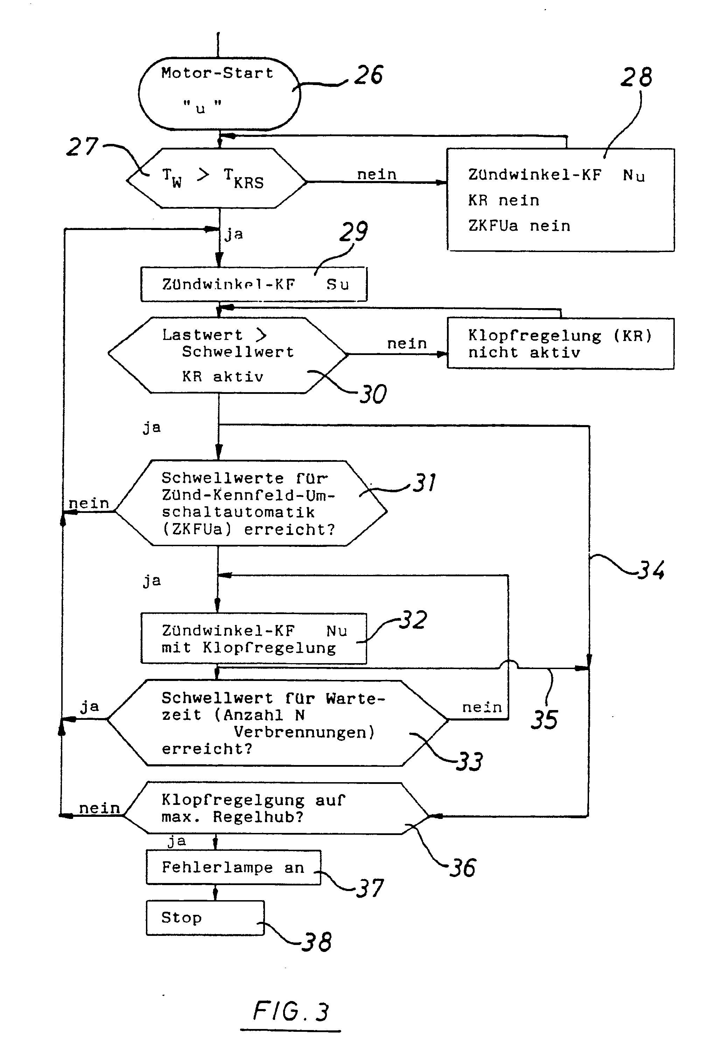

Für die Einstellung "u" entsprechend der Bezeichnung "unverbleit" wird die Steuerung bzw. Regelung nach dem Motorstart 26 anhand der Fig. 3 erläutert.

Nach dem Motorstart 26 wird in 27 ermittelt, ob die Wassertemperatur $t_w$ über einer kritischen Schwelle $t_{KRS}$ liegt. Ist dies nicht der Fall, wird gemäß 28 das Zündwinkelkennfeld $n_u$ eingeschaltet, die Klopfregelung ist noch nicht aktiviert, ebensowenig wie die Zünd-Kennfeld-Umschaltautomatik (ZKFUA).

Liegt die Wassertemperatur über der Schwelle, wird gemäß Maßnahme 29 auf das Zündwinkelkennfeld für Superkraftstoff ($s_u$) umgeschaltet.

In 30 wird ermittelt, ob der Lastwert über einem gewissen Schwellwert liegt. Wenn dies nicht der Fall ist, wird die Klopfregelung (KR) noch nicht aktiv. Ist dagegen der Lastschwellwert überschritten, wird in der Alternative 31 ermittelt, ob der oder die Schwellwerte, bevorzugt ein Klopfschwellwert für eine automatische Zünd-Kennfeld-Umschaltung erreicht ist. Liegt die Klopfneigung unterhalb des Schwellwerts, springt die Schaltung im Ablauf wieder zurück vor die Maßnahme 29 und das Zündwinkelkennfeld $s_u$ bleibt aktiv.

Ist dagegen der Schwellwert für die automatische Umschaltung erreicht, wird mit der Maßnahme 32 das zweite Zündwinkelkennfeld $n_u$ mit überlagerter Klopfregelung eingeschaltet.

Nach einer bestimmten Wartezeit bzw. Anzahl von Verbrennungen, dargestellt mit der Alternative 33, beginnt der Ablauf der Schaltung vor 29 erneut, wobei die Schaltung versucht, wieder auf das Super-Zündwinkelkennfeld umzuschalten und diese Einstellung zu erhalten. Über einen weiteren Zweig 34, der vor 31 abzweigt bzw. einem Zweig 35 wird in 36 ermittelt, ob die Klopfregelung bereits ihren maximalen Regelhub erreicht hat. Falls dies der Fall ist, wird mit Maßnahme 37 eine Fehlerlampe angeschaltet oder ggf. nach Maßnahme 38 der Schaltungsablauf oder sogar die Brennkraftmaschine gestoppt.

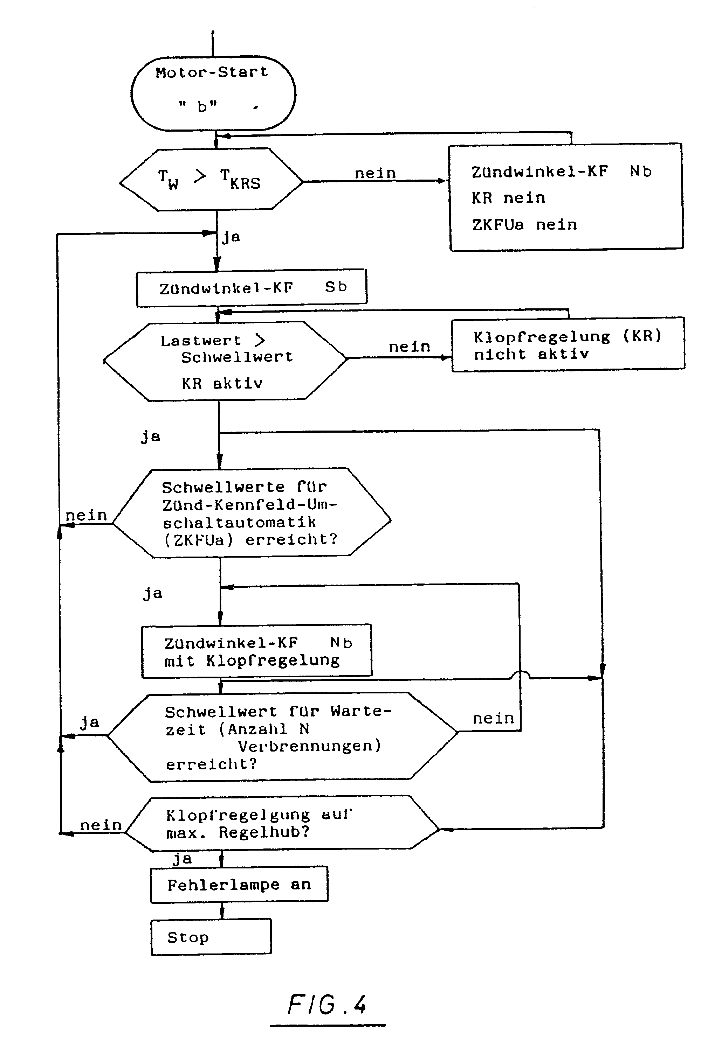

In Fig. 4 ist die Schaltungsfunktion und der Schaltungsablauf nach dem Motorstart bei der Einstellung mit bleihaltigem Kraftstoff, gekennzeichnet durch den Buchstaben "b", dargestellt. Der Ablauf nach Fig. 4 ist gleich mit dem aus Fig. 3, nur daß in Fig. 4 eine automatische Umschaltung zwischen den Zündwinkelkennfelder $s_b$ und $n_b$ erfolgt. Die Ausführungen in Verbindung mit Fig. 3 treffen somit auch auf Fig. 4 zu.

Der zeitliche Ablauf erfolgt so, daß die einzelnen Überprüfungen etwa im Sekundenbereich liegen, bis auf die Wartezeit nach Alternative 33, die zweckmäßig in Abhängigkeit weiterer Parameter im Minutenbereich bis ca. 30 Minuten liegen kann.

Zusammenfassend wird festgestellt, daß mit der Erfindung eine Vorrichtung zur Anpassung der Gemischbildungseinrichtung und der Zündeinrichtung einer Brennkraftmaschine für deren Betrieb mit allen gängigen Otto-Kraftstoff-Qualitäten zur Verfügung gestellt wird, wobei bei bester Kraftstoffausnützung ein umweltfreundlicher Betrieb unter praktischem Ausschluß von Fehleinstellungen möglich ist.

## Ansprüche

1. Vorrichtung zur Anpassung der Gemischbildungseinrichtung und der Zündeinrichtung einer Brennkraftmaschine für deren Betrieb mit allen gängigen Otto-Kraftstoff-Qualitäten,

mit einer umschaltbaren Gemischbildungseinrichtung von einem Gemischkennfeld für $\lambda = 1$ auf ein Gemischkennfeld für $\lambda \neq 1$,

mit einer Zündeinrichtung mit mehreren abgespeicherten, umschaltbaren Zündwinkelkennfeldern, **dadurch gekennzeichnet,**

daß vier Zündwinkelkennfelder ($s_u$, $n_u$, $s_b$, $n_b$) abgespeichert sind, eines angepaßt für den Betrieb mit Superkraftstoff unverbleit ($s_u$), ein zweites für Normalkraftstoff unverbleit ($n_u$), ein drittes für Superkraftstoff verbleit ($s_b$) und ein viertes für Normalkraftstoff verbleit ($n_b$),

daß mit einem handbetätigbaren Schalter (4) oder Stecker die Umschaltung der Gemischbildungseinrichtung (1) und eine erste Umschaltung zwischen jeweils den Zündwinkel kennfeldern $s_u$ und $s_b$ sowie $n_u$ und $n_b$ erfolgt (Schalter 10, 11), so daß bei einem Betrieb der Brennkraftmaschine mit unverbleitem Kraftstoff das Gemischkennfeld $\lambda = 1$ und die Zündwinkelkennfelder $s_u$ und $n_u$ und bei einem Betrieb mit bleihaltigem Kraftstoff das Gemischkennfeld $\lambda \neq 1$

und die Zündwinkelkennfelder $s_b$ und $n_b$ zur Verfügung stehen, und

daß eine nach der ersten Umschaltung der Zündwinkelkennfelder wirksame weitere automatische Umschalteinheit (14) vorgesehen ist, die je nach Stellung der ersten Umschaltung (10, 11) zwischen den Zündwinkelkennfeldern $s_u$ und $n_u$, oder $s_b$ und $n_b$ Umschaltungen vornimmt in Abhängigkeit des Ausgangs wenigstens eines Schwellwertgebers (18) für wenigstens einen Betriebsparameter der Brennkraftmaschine.

2. Vorrichtung nach Anspruch 1, **dadurch gekennzeichnet,** daß der oder die dem Schwellwertgeber (18) zugeführten Betriebsparameter mindestens eine der charakteristischen Motor-Zustandsgröße wie Temperatur von Wasser, Öl oder Ansaugluft und/oder die Außentemperatur und/oder der Barometerstand ist.

3. Vorrichtung nach Anspruch 1, **dadurch gekennzeichnet,** daß an der Brennkraftmaschine eine an sich bekannte, die Zündwinkelkennfeld-Steuerung überlagernde Klopfregelung vorgesehen ist und als Betriebsparameter für den Schwellwertgeber (18) die Klopfhäufigkeit und/oder die Klopfintensität (19) vorgesehen ist, wobei bei Werten über dem Schwellwert vom Zündwinkelkennfeld $s_u$ auf $n_u$ bzw. $s_b$ auf $n_b$ geschaltet wird.

4. Vorrichtung nach Anspruch 3, **dadurch gekennzeichnet,** daß der eingestellte Schwellwert mit der Drehzahl der Brennkraftmaschine veränderlich ist.

5. Vorrichtung nach Anspruch 3 oder 4, **dadurch gekennzeichnet,** daß der Schwellwert vom klopfempfindlichsten oder vom Mittelwert von mindestens zwei Zylindern gebildet wird.

6. Vorrichtung nach einem der Ansprüche 1 bis 5, **dadurch gekennzeichnet,** daß die automatische Rückumschaltung von $n_u$ auf $s_u$ bzw. $n_b$ auf $s_b$ bzw. eine erneute Abfrage des Umschaltschwellwertes erst nach einer Wartezeit (33) erfolgt, die durch die verstrichene Zeit oder eine bestimmte Anzahl von Verbrennungen bestimmt ist.

7. Vorrichtung nach Anspruch 6, **dadurch gekennzeichnet,** daß die eingestellte Wartezeit (33) mit der Drehzahl der Brennkraftmaschine veränderlich ist.

8. Vorrichtung nach einem der Ansprüche 3 bis 7, **dadurch gekennzeichnet,** daß die klopfregelung zylinderselektiv oder nicht zylinderselektiv ist.

## Claims

1. Device for adapting the fuel/air metering system and the ignition system of an internal combustion engine to enable the engine to run with all normally available grades of petrol (gasoline) fuel, with a fuel/air metering system capable of being switched over from a fuel/air map for $\lambda = 1$ to a fuel/air map for $\lambda \neq 1$, with an ignition system with several stored ignition timing maps and a facility for switching over between timing maps, characterised in that four ignition timing maps ($s_u$, $n_u$, $s_b$, $n_b$) are stored, one being suited for operation with premium unleaded fuel ($s_u$), a second for regular unleaded fuel ($n_u$), a third for premium leaded fuel ($s_b$) and a fourth for regular leaded fuel ($n_b$), and that the fuel/air metering system (1) can be switched over with a hand-operated switch (4) or a plug and an initial switch-over can be made between the two pairs of ignition timing maps $s_u/s_b$ and $n_u/n_b$ (switches 10, 11), so that the air/fuel map $\lambda = 1$ and the ignition timing maps $s_u$ and $n_u$ are available when the engine is operated with unleaded fuel, and the air-/fuel map $\lambda \neq 1$ and the ignition timing maps $s_b$ and $n_b$ are available when the engine is run on leaded fuel, and that a further automatic switch-over unit (14) which becomes effective after the first switch-over between the ignition timing maps, is provided, and this switch-over unit, depending on the position of the first switch-over (10, 11), switches over between the ignition timing maps $s_u$ and $n_u$, or $s_b$ and $n_b$, according to the output of the least one threshold sensor (18) for at least one operating parameter of the internal combustion engine.

2. Device in accordance with claim 1, characterised in that the operating parameter(s) fed to the threshold sensor (18) represents at least one of the characteristic engine conditions such as water-, oil- or intake air temperature and/or ambient temperature and/or barometric pressure.

3. Device in accordance with claim 1, characterised in that the combustion engine is provided with a knock control system of a known type which is superimposed on the ignition timing map control set-up, whereby the operating parameter for the threshold sensor (18) is the knock frequency and/or knock intensity (19), so that the ignition timing map switches from $s_u$ to $n_u$ or from $s_b$ to $n_b$ when values are above the threshold.

4. Device in accordance with claim 3, characterised in that the programmed threshold value can be varied with the engine speed of the internal combustion engine.

5. Device in accordance with claim 3 or 4, characterised in that the threshold value is taken from the most knock-sensitive cylinder or from the mean value of at least two cylinders.

6. Device in accordance with claim 1 characterized in that a delay period (33), determined by one of an elapsed time and a certain number of combustions, elapses before the system automatically switches back from $n_u$ to $s_u$ or from $n_b$ to $s_b$, or before the next interrogation of the switch-over threshold takes place.

7. Device in accordance with claim 6, characterised in that the pre-programmed delay period (33) is variable with the engine speed of the internal combustion engine.

8. Device in accordance with any of claims 3 to 7 characterized in that the knock control system may be selective or not selective for the individual cylinders.

## Revendications

1. Dispositif pour l'adaptation du carburateur et de l'allumage d'un moteur à combustion interne à toutes les qualités courantes de carburant pour moteurs à essence, avec un carburateur adaptable d'un réseau de caractéristiques du mélange, pour $\lambda = 1$, à un réseau de caractéristiques, pour $\lambda \neq 1$, avec un dispositif d'allumage comportant plusieurs caractéristiques d'allumage permutables, mémorisées, caractérisé par la mémorisation de quatre réseaux de caractéristiques d'allumage ($s_u$, $n_u$, $s_b$, $n_b$), dont un premier est adapté au supercarburant sans plomb ($s_u$), un deuxième à l'essence ordinaire sans plomb ($n_u$), un troisième au supercarburant plombé ($s_b$), et un quatrième à l'essence ordinaire plombée ($n_b$), en ce que la permutation du carburateur (1) est assurée à l'aide d'un commutateur manuel (4) ou d'une fiche, ainsi qu'une première permutation entre les réseaux de caractéristiques d'allumage $s_u$ et $s_b$, $n_u$ et $n_b$ (commutateurs 10, 11), si bien que les caractéristiques du mélange $\lambda = 1$ et les caractéristiques d'allumage $s_u$ et $n_u$ sont disponibles pour un fonctionnement du moteur à combustion interne au carburant sans plomb, et que les caractéristiques du mélange $\lambda \neq 1$ et les caractéristiques d'allumage $s_b$ et $n_b$ sont disponibles pour un fonctionnement au carburant plombé, et en ce qu'une autre unité de permutation automatique (14), active après la première permutation des caractéristiques d'allumage, opère des permutations entre les caractéristiques d'allumage $s_u$ et $n_u$, ou $s_b$ et $n_b$, suivant la position de la première permutation (10, 11), en fonction de la sortie d'un capteur de seuil (18) au moins, pour un paramètre de service au moins du moteur à combustion interne.

2. Dispositif suivant la revendication 1, caractérisé en ce que le ou les paramètres de service, transmis au capteur de seuil (18), sont au moins l'une des grandeurs d'état caractéristiques du moteur, telles que température de l'eau, de l'huile ou de l'air d'aspiration, et/ou la température externe et/ou la hauteur barométrique.

3. Dispositif suivant la revendication 1, caractérisé en ce qu'un réglage du cliquetis connu en soi, qui se superpose à la définition des réseaux de caractéristiques d'allumage, est prévu sur le moteur à combustion interne, et en ce que le paramètre de service, prévu pour le capteur de seuil (18), est la fréquence et/ou l'intensité de la détonation (19), une permutation des caractéristiques d'allumage, de $s_u$ à $n_u$ et/ou $s_b$ à $n_b$, étant assurée pour des valeurs supérieures au seuil.

4. Dispositif suivant la revendication 3, caractérisé en ce que le seuil réglé varie avec la vitesse de rotation du moteur à combustion interne.

5. Dispositif suivant l'une des revendications 3 et 4, caractérisé en ce que le seuil est formé par le cylindre le plus sensible au cognement, ou par la valeur moyenne de deux cylindres au moins.

6. Dispositif suivant l'une quelconque des revendications 1 à 5, caractérisé en ce que la permutation automatique inverse, de $n_u$ à $s_u$, et/ou de $n_b$ à $s_b$, et un nouvel appel du seuil de permutation, ne sont assurés qu'à la fin d'un délai d'attente (33), déterminé par le temps écoulé ou par un nombre donné de combustions.

7. Dispositif suivant la revendication 6, caractérisé en ce que le délai d'attente réglé (33) varie avec la vitesse de rotation du moteur à combustion interne.

8. Dispositif suivant l'une quelconque des revendications 3 à 7, caractérisé en ce que le réglage du cliquetis est sélectif ou non sélectif des cylindres.

FIG.1

Fahrzeug mit Verbrennungsmotor für
<u>alle</u> Otto-Kraftstoff-Qualitäten

*23*

Bleifrei-
Kraftstoff vorhanden?

nein

Werkstatt-Umrüstung:

- 3-Weg-Katalysator
  ausbauen

- $\lambda$-Sonde ausbauen

- Motor-Einstellung
  ändern

- PIN-Codierung
  ändern:

  $\lambda$ = 1 Kennfeld und
  Regelung

  $\rightarrow$ $\lambda$ $\neq$ 1 Kennfeld;

  Zünd-KF   Su/Nu

  $\rightarrow$   Sb/Nb

*25*

ja

Ausrüstung Fahrzeughersteller bleibt:

- 3-Weg-Katalysator

- $\lambda$-Sonde

- Motor-Grundeinstellung

- PIN-Codierung für:

  Gemisch $\lambda$ = 1 Kennfeld und Regelung;

  Zünd-KF   Su/Nu

*24*

Motor-Start "u"

Motor-Start "b"

*(zu FIG.3)*

*(zu FIG.4)*

*FIG.2*

```
              ┌─────────────┐
              │ Motor-Start │ ─── 26
              │   " u "     │
              └─────────────┘
                     │                          ┌─────────────────────┐
   27 ───           ╱ ╲         nein            │ Zündwinkel-KF   Nu   │  ─── 28
          ╱ T_W > T_KRS ╲ ──────────────────►   │ KR nein             │
          ╲             ╱                       │ ZKFUa nein          │
                     │ ja          29           └─────────────────────┘
              ┌──────────────────┐
              │ Zündwinkel-KF  Su │ ─── 29
              └──────────────────┘
                     │
            ╱ Lastwert >  ╲        nein          ┌─────────────────────┐
           ╱  Schwellwert  ╲ ─────────────────►  │ Klopfregelung (KR)  │
           ╲   KR aktiv    ╱                      │ nicht aktiv         │
                     │ ja       ─── 30           └─────────────────────┘
            ╱ Schwellwerte für ╲
           ╱  Zünd-Kennfeld-Um-  ╲     ─── 31
    nein  ╱   schaltautomatik     ╲
   ◄──────╲  (ZKFUa) erreicht?    ╱
                     │ ja
              ┌──────────────────────┐
              │ Zündwinkel-KF   Nu   │  ─── 32
              │ mit Klopfregelung    │
              └──────────────────────┘
                     │
            ╱ Schwellwert für Warte- ╲   nein
    ja     ╱  zeit (Anzahl N          ╲ ──────── 35
   ◄──────╲       Verbrennungen)      ╱
           ╲  erreicht?              ╱  ─── 33
                     │ ja
            ╱ Klopfregelgung auf ╲
    nein   ╱  max. Regelhub?       ╲
   ◄──────╲                        ╱  ─── 36
                     │ ja
              ┌─────────────────┐
              │ Fehlerlampe an  │ ─── 37
              └─────────────────┘
                     │
              ┌─────────┐
              │  Stop   │ ─── 38
              └─────────┘
```

── 34

## FIG. 3

Motor-Start

" b"

$T_W > T_{KRS}$ — nein → Zündwinkel-KF  Nb
KR nein
ZKFUa nein

ja

Zündwinkel-KF    Sb

Lastwert >
Schwellwert
KR aktiv — nein → Klopfregelung (KR)
nicht aktiv

ja

Schwellwerte für
Zünd-Kennfeld-Umschaltautomatik
(ZKFUa) erreicht? — nein

ja

Zündwinkel-KF    Nb
mit Klopfregelung

Schwellwert für Wartezeit (Anzahl N
Verbrennungen)
erreicht? — nein

ja

Klopfregelgung auf
max. Regelhub? — nein

ja

Fehlerlampe an

Stop

*FIG.4*